(19) Europäisches Patentamt
European Patent Office
Office européen des brevets

(11) **EP 2 990 383 B1**

(12) **EUROPEAN PATENT SPECIFICATION**

(45) Date of publication and mention
of the grant of the patent:
**02.05.2018 Bulletin 2018/18**

(51) Int Cl.:
*C02F 1/28* (2006.01)    *B01J 20/08* (2006.01)

(21) Application number: **14182167.8**

(22) Date of filing: **25.08.2014**

(54) **A METHOD AND A SYSTEM FOR FILTERING LIQUID**

METHODE UND SYSTEM ZUR FLÜSSIGFILTRATION

MÉTHODE ET SYSTÈME DE FILTRATION DE LIQUIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.03.2016 Bulletin 2016/09**

(73) Proprietor: **RWB Groupe SA**
**2900 Porrentruy (CH)**

(72) Inventor: **Urfer, Daniel**
**2800 Delémont (CH)**

(74) Representative: **BOVARD AG**
**Patent- und Markenanwälte**
**Optingenstrasse 16**
**3013 Bern (CH)**

(56) References cited:
**WO-A2-03/078030      GB-A- 490 972**
**US-A1- 2007 181 511**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical field of the invention

The invention relates to a filtering system and a method of filtering liquid. In particular, the present invention provides an effective means of removing pathogenic organisms including *E. coli* and *Enterococcus* from raw water or contaminated liquid, improving the filter capacity and life cycles with an increased filtration rate, reducing the costs and maintenance requirements of sand filters.

Background of the invention

Sand filtration, both slow and rapid, has long been used as a method of purifying water. In particular, the use of slow sand filtration (SSF) for providing water supply needs of small community worldwide dates back to the early nineteenth century. SSF is a well known process for drinking water treatment and was first introduced in the city of Paisley in Scotland to provide water to a local industry. James Simpson, a water engineer of the Chelsea Water Company, introduced SSF in the city of London in 1828. Thanks to the overall efficiency of slow sand filtration for the removal of waterborne pathogens, epidemics such as cholera almost totally disappeared in central Europe at the beginning of the 20th century. The fundamental works of Pasteur, Koch and Escherich permitted to scientifically demonstrate the relationship between the presence of pathogens in water and cholera disease.

During the following decades, the removal of pathogenic microorganisms such as bacteria, viruses, *Giardia lamblia* and *Cryptosporidium parvum* in SSF has been widely documented. According to the present art, numerous water utilities in central Europe and North America continue to use slow sand filtration, mostly as a polishing step at the end of multi-barrier treatment chains.

Prior to the polishing step, roughing filtration can be used as a pretreatment process for water, since it efficiently separates fine solids particles over prolonged periods without addition of chemicals. For suspensions with particles that do not readily settle, roughing filtration provides superior treatment to basic sedimentation methods and represents an alternative to more costly conventional coagulation methods. In addition, roughing filters also partly improve the bacteriological water quality and to a minor extent, change some other water quality parameters such as colour or the amount of dissolved organic matter.

However, at the beginning of the 20th century, many water utilities started to progressively replace SSF by rapid sand filtration (RSF), which has become today the most common filtration process used for drinking water treatment in the world. Rapid filters are generally operated at hydraulic loadings of about 5-10 m/h and require the dosage of a coagulant ahead of the filters in order destabilize the particles which are to be retained in the filter bed. Compared to SSF, such filters require considerably less surface because of the higher hydraulic loading. However, RSFs require automatic backwash with water and air (air scour), requiring electric pumps and pressured air.

Sand filters have been widely used as natural media filatration agents in removing contaminants in wastewater. For example, compost are effective in removing aluminium and PCBs, Arsenic can be removed with activated alumina and bone char. Iron filings is used in removing many heavy metals such as chromium, selenium, arsenic as well as pathogens and cyanides.

Slow sand filters are commonly designed with a hydraulic loading of 0.1-0.2m/h and the media depth is about 1 meter. Quartz sand is usually used as filter media but other commonly used filter media in drinking water treatment such as pumice, anthracite and granular activated carbon (GAC) are also used in some cases. It is generally admitted that the removal of particles and microorganisms is highly related to the buildup of the "Schmutzdecke" in the first few centimeters at the surface of slow sand filters. It has been shown that a certain time period is needed for the buildup of the "Schmutzdecke" at the top of a SSF, referred to as the ripening period. The duration of the ripening period is largely dependent on the SSF-influent water quality, particularly in terms of the concentration of particles, concentration of biodegradable organic matter and water temperature.

According to the state of the present art, different filtering media used for such filters including quartz sand all have a negative surface charge at the pH values of natural waters. Surface charge of filtering media is commonly measured as zeta potential (mV). Because the particles and microorganisms suspended in the raw water are also negatively charged, their retention within the filter bed of such filters is compromised by the repulsive forces between the media grains (the collectors) and the particles/microorganisms suspended in the water to be treated. Yao and colleagues (1971) have provided a fundamental understanding of the retention mechanisms of particles and the relevant parameters in packed bed filters. In general, it has been shown in several studies that particle capture in a filter will only occur when the surface charge is of opposite sign.

According to Yao, the overall fraction of particles removed in a packed bed filter at steady-state can be calculated using the following equation:

$$\frac{N}{N_0} = \exp\left\{\frac{-3(1-\varepsilon_0)}{2}\alpha\eta\frac{L}{d_m}\right\} \qquad \text{(eq. 1.1)}$$

where: No: initial concentration of particles, N: final concentration of particles, $\varepsilon_0$: initial bed porosity, $\alpha$: collision efficiency factor, $\eta$: single collector efficiency, L: filter bed depth, $d_m$: average media diameter, the filter media is assumed to be spherical.

The single collector efficiency, $\eta$ is a ratio, i.e. the rate at which particles (and microorganisms) strike the collector (the media grain) divided by the rate at which particles (and microorganisms) flow toward the collector. These authors have shown that the single collector efficiency, $\eta$ is lowest for particles (and microorganisms) in the range of 1 $\mu$m of diameter. This is of particular interest because many pathogenic bacteria and viruses contained in natural waters are about 1 $\mu$m in size. The removal of such microorganisms in packed bed filters is therefore particularly challenging.

The collision efficiency factor, $\alpha$ reflects the chemistry of the system and is defined as a ratio, i.e. the number of contacts which succeed in producing adhesion divided by the number of collisions which occur between suspended particles (and microorganisms) and the filter media. In a completely destabilized system, i.e. with optimized dosage of a coagulant ahead of the packed filter bed, $\alpha$ is ideally equal to 1. However, for slow sand filters where no chemicals are added ahead of the packed filter bed for particle destabilization, the collision efficiency factor, $\alpha$ is largely dependent on the surface charge of the particles and microorganisms as well as the surface charge of the filter media (the collector). Consequently, for packed bed filters without coagulation (e.g. SSF), $\alpha$ can be increased by using filter media with a less negative surface charge. As mentioned earlier, the commonly used filter media for slow sand filtration have relatively low collision efficiency factors for particle and microorganism removal, because of their overall negative surface charge (negative zeta potential).

Furthermore, according to the state of the present art, it has been shown the effects of filtering media surface charge on the removal of particles and microorganisms in filter beds. Some artificially treated filter media are generally used in order to obtain less negatively charged filter media. However, there remains need in the art to find an alternative in comparison to the existing technologies wherein the slow sand filter media which is less negatively charged (or preferably positively charged), abundantly available, easy to be replaced and has lower cost to be used for the production of potable filtered water that is safe for consumption.

Patent document WO03078030 relates to a method for removing a pollutant from emissions or the environment comprising the step of: contacting a mineral ore or the use of a mineral ore selected from the group consisting of bauxite, modified bauxite and mixtures thereof. Typically, the pollutant is a heavy metal or a microorganism.

Patent document US 2007181511 describes a method for removing a pollutant from emissions or the environment comprising: contacting a mineral ore or the use of a mineral ore selected from the group consisting of bauxite, modified bauxite and mixtures thereof. Typically, the pollutant is a heavy metal or a microorganism.

Patent document GB 490972 describes methods of removing fluorides from water, wherein the water is subjected to the action of materials which are capable of removing the fluorides from water and which, when they are exhausted can be regenerated for treatment of further water by successive treatments with dilute alkali and dilute acid.

Summary of the present invention

The inventors of the present invention have surprisingly found out that the above-formulated need can be met by creating a filtering system according to claim 1 and the method according to claim 4.

Disclosed herein is a filtering system for filtering liquid, comprising at least one compartment having filter bed including filtering media, wherein the filtering media comprise natural bauxite. This filtering system has the advantage that small particles such as viruses and bacteria can be filtered out in an efficient way with the abundantly available filtering media and meanwhile having low maintenance cost.

Also disclosed herein is a method for filtering liquid, said method includes the steps of

a) providing a first and/or a next compartment(s) (second, third, fourth, fifth...) having filter bed including filtering media, wherein said filtering media may comprise natural bauxite;

b) connecting said first compartment to the next compartment(s) (second, third, fourth, fifth...) so that liquid filtered by the first compartment is directed to the next compartment(s) (second, third, fourth, fifth...);

c) collecting the filtered liquid from the previous steps (a) and (b) for further process.

Disclosed herein is that the filtering system comprises at least one roughing filter bed. This advantageously enable the filtering system to filter out particles that are rough or other objects which may block the filtering

system. In one embodiment, the roughing filter is more than about 3 mm. This would efficiently filtering out any obvious particles or objects.

Disclosed herein also is a compartment having roughing filter bed being operably connected to the compartment having slow sand filter bed so that liquid filtered by said roughing filter is directed to said slow sand filter bed for further process. This would advantageously allow the filtering system to efficiently filter out first any obvious particles followed by tiny objects including microscopic organisms.

Disclosed herein is that the natural bauxite is located in a slow sand filter bed. This advantageously allows for removal of microorganisms from the filtering system. Nevertheless, natural bauxite may be also located in the roughing filter bed to have similar effect.

Further embodiments will be apparent to a person skilled in the art with reference to the following and description of various non-limiting embodiments.

Brief description of the drawings

The drawings are not necessarily drawn to scale, emphasis instead is generally being placed upon illustrating the principles of various embodiments. In the following description, various embodiments of the invention are described with reference to the following drawings.

Figure 1: One example of a filtering system according to the present invention.

Figure 2: Another example of a filtering system according to the present invention.

Figure 3: Diagram illustrating different methods of down flow, up flow and horizontal flow of filtering system used for filtering liquid according to various examples of the present invention.

Figure 4: Zeta potential of the natural bauxite used in the pilot tests according to one example of the present invention.

Figure 5: An example of a filtering system layout according to one variant of the present invention.

Detailed description of the present invention

A new method for filtering liquid according to claim 4 and a filtering system according to claim 1 is espoused. Said filtering system may comprise at least one compartment having roughing filter and/or may comprise at least one compartment having slow sand filter, wherein said slow sand filter comprising natural bauxite.

Specifically, disclosed herein is a filtering system for filtering liquid, comprising at least one compartment having filter bed including filtering media, wherein the filtering media comprises natural bauxite. The grain particle size of the natural bauxite is about 0.2-0.5 mm.

The filtering system may be designed to operate in small-scale or in large-scale facility. Disclosed herein is that the filtering system is operated in field-scale facility and/or is a slow sand filtering system. The grain particle size of the slow sand filtering media is preferably less than about 0.5 mm.

The term "liquid" as used herein relates to a substance that is not solid or a gas and that can be poured easily. The liquid is aqueous or a solution, water, raw water, potable water and/or drinkable creek water.

The terms "at least one" and "one or more" as used herein are interchangeable and relate to at least 1 and include 1, 2, 3, 4, 5, 6, 7, 8, 9 and more. Any function assigned to the "one or more" or "at least one" compartment may be achieved independently by each of the compartment or achieved by the combination of the more than one compartments. The compartments can be aligned in any orders, for instance vertical or horizontal.

The term "filter bed" as used herein refers to a layer of sand or gravel in a tank or reservoir through which a liquid is passed so as to purifying it. The filter bed can be in any size, length or depth. Disclosed herein the filter bed is between about 80 cm and about one meter in depth.

The term "filtering media" as used herein refers to layers (portions) of various materials used in a filter to trap particulate matter. Filters are referred to as single-media or multi-media, not necessarily depending on the number of layers (portions) they possess.

The term "roughing filter" as used herein refers to any filter material that has a large specific surface to enhance the sedimentation process taking place in the roughing filter and has high porosity to allow the accumulation of the separated solids. Any inert, clean and insoluble material can be used as "roughing filter". The roughing filter does not require any specific roughness nor requires any specific shape nor structure. The roughing filter comprising inert, insoluble natural earth elements such as gravel, broken stones, rocks from quary or broken burnt clay bricks or synthetic material such as plastic material either as chips or modules (e.g. used for trickling filters). Biodegradable material such as agricultural waste, charcoal or coconut fibre may also be used as a roughing filter. The grain particle size of the roughing filter is at least about 3 mm.

The term "slow sand filter" as used herein refers to any sand that function as filtering media where the grain particle size is less than about 0.5 mm.

In order to overcome the above described drawbacks of negatively charged filter media commonly used for drinking water filtration, the present invention searches for alternative filtering media and ultimately discovered that natural bauxite is an ideal alternative filtering media for filtering pathogens such as viruses and bacteria such as *E.coli* and Enterococcus as it generally has a zeta potential of close to zero or slightly positive. In the present invention, natural bauxite is used as a a filtering media for packed bed filters used in a filtering system for the treatment of liquid, for example raw water and/or potable water. Bauxite, an aluminum ore, contains a large fraction (> 50%) of aluminum oxides and is the raw material used for the production of aluminum. Bauxite is readily available in large quantities in many places worldwide (e.g. West Africa, Australia, China, Greece and Brazil). It is therefore contemplated that natural bauxite to be used as an alternative filtering media for drinking water production would be more efficient for the removal of microorganisms and particles in slow sand filters compared to commonly used filter media such as quartz sand.

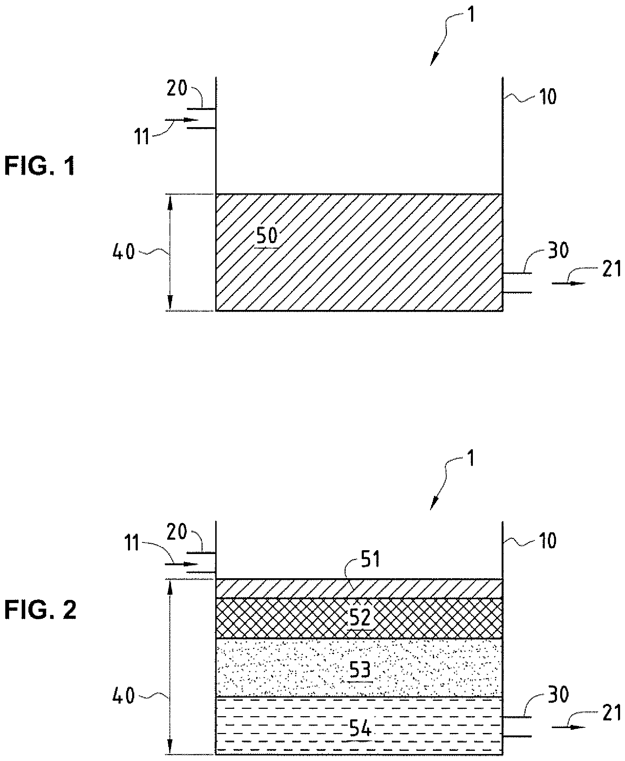

Figure 1 shows a schematic representation of the filtering system of the present invention. The filtering system 1 includes a compartment 10 comprising an inlet 20 and an outlet 30. The compartment 10 also includes a filter bed 40 comprising a plurality of filtering media 50 that are adapted to remove impurities, contaminants, and/or particulates and the like from incoming liquid stream 11 passing through the filter bed 40.Thus, an exiting liquid stream 21 exiting the compartment 10 via the outlet 30 will contain a reduced amount of contaminants/impurities.

The filter bed 40 may comprise of at least one portion of natural filtering media and/or synthetic filtering media. More particularly, the filter bed 40 may comprise natural filtering media such as composts, gravel, broken stones, broken burnt clay bricks, coconut fibre, charcoal, quartz sand and the like, natural bauxite and the like, bone char, gravels, granular activated carbon, iron filings, aggregate and/or synthetic filtering media such as plastic materials and other suitable filtering media. In one example, the filtering media 50 may comprise of quartz sand 60 and/or natural bauxite 70. In the present invention, it is found that natural bauxite is advantageous in removing pathogens (for instance viruses and/or bacteria such as *E.coli* and Enterococcus).

The filtering media 50 may be combined in any amount and/or ratio to treat the liquid stream 11 via filter bed 40. These combinations and ratios are generally application specific. In one example, the liquid may comprise bacteria such as *E.coli* and Enterococcus. In this example, one single portion of natural bauxite may be comprised in the compartment, or with a combination of natural bauxite and quartz sand. Other combination may also be applicable. The aggregate ratio may be such as at least about 1:1; such as at least about 3:5; such as at least about 1:2; such as at least about 1:3; such as at least about 1:5; such as at least about 1:15; such as at least about 1:20 of the combinations.

The filtering media 50 may be utilized within the filter bed 40 in any arrangement that facilitates the removal of impurities or contaminants from the liquid. For example, the filtering media 50 may be comingled as a single bed layer, or may be laid in different layers/portions.

Figure 2 illustrates another example according to the present invention, wherein the filter bed 40 may comprise a plurality of distinct layers, each of which may comprise one or more of the filtering media 50. In one particular example, a first layer 51 may comprise a first filtering element, a second layer 52 may comprise at least one portion of filtering media 50 such as quartz sand 60, a third layer 53 may comprise at least one portion of filtering media 50 such as natural bauxite 70, a fourth layer 54 may comprise at least one portion of filtering media 50 such as quartz sand 60 and the next layer(s) may comprise one or more portion(s) of filtering media 50. In a further example, the filter bed 40 may comprise a plurality of filtering layers that may be tailored to remove one or more contaminants, impurities, toxics and/or chemicals from the liquid. One or more of these plurality of layers may also be tailored to facilitate a suitable residence time by tailoring the porosity of the layer via one or more of the filtering media. In this and/or other embodiment of the present invention, the compartment may further comprise at least one layer of "dirty layer" (schmutzdecke) 51 at the top.

The compartment 10 may be any suitable container, with or without lid, adapted to contain the filter bed 40, having one or more inlet 20 and one or more outlet 30. In one example, the compartment 10 is an in-ground pit utilized in a creek treatment arrangement. Furthermore, other suitable configuration may be suitably utilized according to the present invention. For example, above ground columns and/or tanks. They may be in any combination and may be interconnected therewith. The compartment 10 may be in any size to withhold the necessary amount of filter bed 40 together with liquid stream 15, and may also be differently adapted for specific application. The liquid stream 15 residence time within the filter bed 40 may be adapted differently according to the need.

The inlet 20 and the outlet 30 are utilized to feed the compartment 10 with the liquid stream 11,15, 21. The inlet 20 and the outlet 30 may be any suitable type of apparatus that facilitates communication between liquid stream 15 and the filtering media 50 in the filter bed 40.

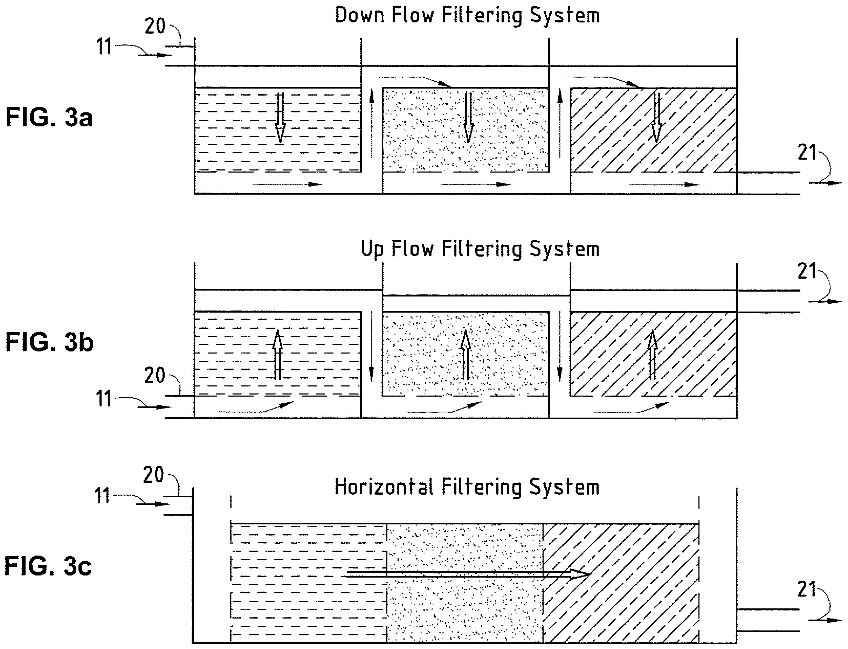

Figure 3 illustrates various examples according to the present invention methods for filtering liquid. In the illustrated examples, the methods include providing three compartments having filter beds including filtering media, wherein said filtering media may further comprise at least one portion of "dirty layer" (schmutzdecke) 51 and/or at least a portion of natural bauxite 70. The compartment 10 may comprise roughing filter and/or slow sand filter. The vertical flow filtering system may operate for instance down flow (Fig. 3a), up flow (Fig. 3b) or the like. They are hence either supplied by inflowing water at the filter top or at the filter bottom or any suitable location. The vertical flow filtering system occupies minimal floor space when compared to horizontal filtering system. Shown in Fig. 3c is a horizontal flow filtering system which has the advantages of unlimited filter length and has a simple layout. In all shown example (Fig. 3a-c), the first compartment is operably connected to the second compartment and to the next compartment. Thus, liquid stream filtered in the first compartment is directed to the second compartment and then to the third compartment. The filtered liquid may then be collected for further processing.

Example

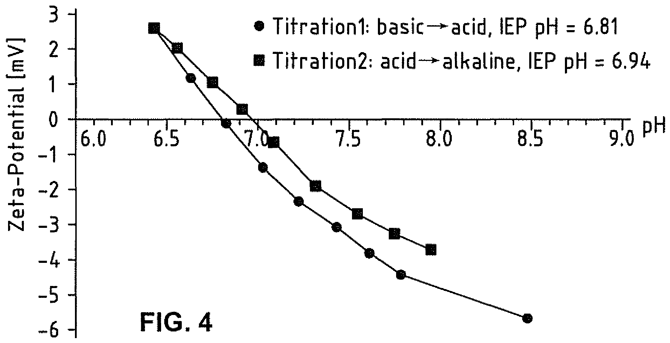

Natural bauxite used in this example was raw bauxite from Southern France provided by SIBELCO Europe. The zeta potential of this raw natural bauxite at different pHs is shown in Figure 4. The zeta potential measurement was performed by EMPA, Dübendorf, Switzerland using the electro acoustic method and an apparatus from Colloid Dynamics. Zeta potential results as shown in Figure 4 disclose that the surface charge (zeta potential) of natural bauxite is slightly positive or close to zero, which is the desired condition to be used as a filtering system in the present invention. The isoelectric point (IEP) of the bauxite was between 6.8 and 6.9 depending on the titration procedure (forward or backward titration).

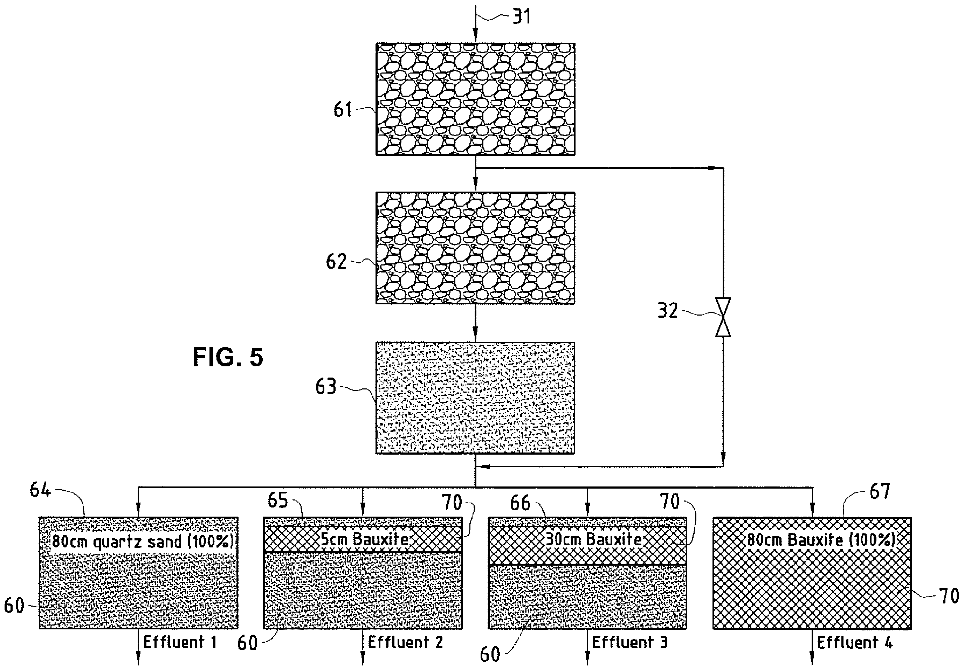

In order to investigate the performance of natural bauxite as a filtering media in filtering system, in one example as shown in Fig. 5, different pilot tests have been conducted using raw water from a small creek in Porrentruy, Switzerland. Fig. 5 shows the layout of the multistage filtration (MSF) pilot plant. The design parameters used for the roughing filters followed the recommendations of Sandec (1996). The natural bauxite filtering media size was about 0.2-0.5 mm. The media diameter of the standard quartz sand used in filter beds 64 to 66 was about 0.1-0.3 mm. However, any natural bauxite or the like and/or quartz sand and/or other filtering media that are coming from other regions which fulfilled the mentioned criteria may also be used.

The raw water quality of the karstic creek (Bacavoine) is shown in Table 1. Raw water quality is highly variable as a result of rainfall in the catchment area and consequently, during heavy rainfall events, turbidity of the raw water regularly exceeds 100 FTU (or FNU (Formazin Nephelometric Units).). It is however preferred that the raw water have a turbidity of less than 100 FTU. In this example, raw water from Bacavoine creek 31 flows firstly to a first roughing filter bed 61 and subsequently to a second roughing filter bed 62. The filtered water then flows to a first slow sand filtering bed 63 and subsequently to a second slow sand filtering bed 64, 65, 66, 67.

Table 1: Raw water quality of Bacavoine creek, Porrentruy Switzerland, n=120, grab samples, sampling period between 1980 and 2009.

| Parameter | Temperature [°C] | pH [-] | Conductivity [µS/cm at 20°C] | Turbidity [FTU] |
|---|---|---|---|---|
| Minimum, n=120 | 6.9 | 6.25 | 354 | 0.3 |
| Maximum, n=120 | 14.1 | 7.89 | 530 | 39.0 |
| Average, n=120 | 9.7 | 7.29 | 439 | 3.5 |
| Parameter | DOC [mg C/l] | Ammonium [mg NH4+/l] | Nitrate [mg NO3-/l] | Total Hardness [°f] |
| Minimum, n=120 | 0.5 | 0.00 | 10.0 | 21.0 |
| Maximum, n=120 | 4.1 | 1.96 | 47.0 | 29.0 |
| Average, n=120 | 1.3 | 0.06 | 16.1 | 26.1 |
| Parameter | E. coli [nb/100 ml] | Enterococcus [nb/100 ml] | HPC [nb/ml] | |
| Minimum, n=120 | 0 | 0 | 30 | |
| Maximum, n=120 | 10300 | 4500 | 21000 | |
| Average, n=120 | 604 | 339 | 3149 | |
| DOC = dissolved organic carbon; HPC = heterotrophic plate count | | | | |

In this example, the 2nd stage slow sand filter step is subdivided in 4 parallel compartments 64, 65, 66, 67 containing different filtering media. The surface area of each compartment was 0.2 m$^2$ and the hydraulic loading of the four slow sand filters was 0.15 m/h. In order to challenge the 2nd stage slow sand filter with water of relatively poor quality, the 4 parallel slow sand filters were fed with water from the effluent of the first roughing filter for a period of 48 hours before each sampling campaign 32 (in Figure 5). Following the sampling, the operational mode of the pilot plant was switched back to normal, i.e. the four parallel filter received water from the effluent of the first slow sand filter, until the next sampling campaign.

Table 2: Detailed composition of the filtering media of the four parallel slow sand filters according to Fig. 5 is shown.

| Filter bed depth | Composition [cm] | | | |
|---|---|---|---|---|
| | Filter 1(64) | Filter 2(65) | Filter 3(66) | Filter 4(67) |
| 80 cm | 80 cm Quartz | 5 cm Quartz<br>5 cm Bauxite<br>70 cm Quartz | 5 cm Quartz<br>30 cm Bauxite<br>45 cm Quartz | 80 cm Bauxite |

Table 2 illustrates different filtering media composition used in this example. A total of about 80 cm filter bed is used in this example. The effluents 1, 2, 3 and 4 from filter bed 64, 65, 66 and 67, respectively, were evaluated for the effectiveness of the filter compartments 64, 65, 66, 67 in removing bacteria including fecal indicator bacteria, namely *E. coli* and *Enterococcus* on several different sampling occasions. The supernatant of each SSF was spiked with raw water and the effluent levels of *E.coli* and *Enterococcus* were monitored. The first test began on June 05, 2013 and natural bauxite was introduced in filters bed 66 and 67. Three sampling dates were carried out on June 11, 2013; June 24, 2013 and August 19, 2013 before the introduction of 5 cm of natural bauxite in filter bed 65. Four different sampling dates were carried out from September 16, 2013 and December 19, 2013 as shown in Tables 3a and b. The "schmutzdecke" on all four filters were removed on January 16, 2014 and subsequently, further three sampling dates were carried out in between Feb and March 2014.

Table 3a: Fecal indicator bacteria *E.coli* in the filter influent and effluents of the pilot plant.

| Sampling Date | *E.coli* [UFC/100ml] | | | | |
|---|---|---|---|---|---|
| | Influent | Effluent 1 | Effluent 2 | Effluent 3 | Effluent 4 |
| 05.06.2013 | Introduction of Bauxite in filters 3 and 4 | | | | |
| 11.06.2013 | 1300 | 600 | 580 | 0 | 0 |
| 24.06.2013 | 178 | 38 | 13 | 0 | 0 |
| 19.08.2013 | 79 | 12 | 2 | 0 | 0 |
| 04.09.2013 | Introduction of 5 cm bauxite in filter 2 | | | | |
| 16.09.2013 | 37 | 23 | 4 | 1 | 0 |
| 14.10.2013 | 240 | 22 | 81 | 0 | 0 |
| 18.11.2013 | 150 | 1 | 2 | 0 | 0 |
| 19.12.2013 | 16 | 2 | 1 | 0 | 0 |
| 16.01.2014 | Removal of the "schmutzdecke" on the 4 filters | | | | |
| 03.02.2014 | 96 | 0 | 3 | 0 | 0 |
| 03.03.2014 | 90 | 1 | 0 | 0 | 0 |
| 31.03.2014 | 5 | 1 | 0 | 0 | 0 |

The effect of the use of natural bauxite media on the removal of bacteria can be observed in tables 3a and 3b. In the filter bed 67 containing 100% of natural bauxite, no fecal indicator bacteria have been detected in the filter effluent despite of some very high values of bacteria number, i.e. over 1'000 *E.coli*/100mL in the filter influent. The filter containing 30 cm of natural bauxite showed similar results whereby said slow sand filter successfully removed all *E.coli* and *Enterococcus (despite one* single value of *E. coli*/100 mL was measured in the effluent 3 of filter bed 66 on September 16, 2013, whereas the filter bed 64 containing 100% quartz sand 60 showed a substantially lower performance for bacteria retention. The microbiological quality standards for drinking water in Switzerland are 0/100 mL for *E. coli* and *Enterococcus.* It is therefore implicit that slow sand filter containing natural bauxite of 30 cm or more can be used to effectively remove *E.coli* and *Enterococcus* bacteria.

Table 3b: fecal indicator bacteria *Enterococcus* in the filter influent and effluents of the pilot plant.

| Sampling Date | Enterococcus [UFC/100ml] | | | | |
|---|---|---|---|---|---|
| | Influent | Effluent 1 | Effluent 2 | Effluent 3 | Effluent 4 |
| 05.06.2013 | Introduction of Bauxite in filters 3 and 4 | | | | |
| 11.06.2013 | 420 | 240 | 200 | 0 | 0 |
| 24.06.2013 | 170 | 28 | 2 | 0 | 0 |
| 19.08.2013 | 32 | 8 | 3 | 0 | 0 |
| 04.09.2013 | Introduction of 5 cm bauxite in filter 2 | | | | |
| 16.09.2013 | 14 | 16 | 3 | 0 | 0 |
| 14.10.2013 | 90 | 8 | 21 | 0 | 0 |
| 18.11.2013 | 18 | 1 | 0 | 0 | 0 |
| 19.12.2013 | 26 | 0 | 0 | 0 | 0 |
| 16.01.2014 | Removal of the "schmutzdecke" on the 4 filters | | | | |
| 03.02.2014 | 44 | 19 | 1 | 0 | 0 |
| 03.03.2014 | 14 | 0 | 0 | 0 | 0 |
| 31.03.2014 | 0 | 0 | 0 | 0 | 0 |

The results in Tables 3a and 3b also show that the positive effect of natural bauxite on the retention of *E. coli* and *Enterococcus* lasted for a long period of time. In fact, the pilot plant was operated from approximately the beginning of June 2013 until the end of March 2014, i.e. duration of about 300 days. For packed bed filters receiving raw waters with a high concentration of particles, Yao et al., (1971) have shown that the initial positive effect of the use of positively charged filter media on the retention of particles does only last for a relatively short period of time. In such systems the collector (media grains) are in fact rapidly covered with the negatively charged particles and the ability of the filters to remove particles (and microorganisms) from the water would therefore rapidly decrease.

In this example where two slow sand filters of natural bauxite 70 and quartz sand 60 were operated in series 66; 67, the natural bauxite containing slow sand filter (2nd stage) received only a low charge of particles and the positive effect on the retention of the microorganisms lasted for several months or over 1400 bed volumes (BVs) of filtered water. The use of natural bauxite as a filtering media for slow sand filters is therefore particularly useful in 2nd stage slow sand 66 67 filters or as a media layer at the bottom of single stage slow sand filters, e.g. 50 cm of quartz sand on top of 50 cm of bauxite for a single stage slow sand filter.

Table 4: Turbidity in the filter influent and effluents of the pilot plant.

| Date | Influent [FNU] | Effluent [FNU] | | | |
|---|---|---|---|---|---|
| | | Filter 1 (64) | Filter 2 (65) | Filter 3 (66) | Filter 4 (67) |
| 11.06.2013 | 13.7 | 1.650 | 0.850 | 0.001 | 0.001 |
| 24.06.2013 | 1.8 | 0.170 | 0.001 | 0.001 | 0.003 |
| 19.08.2013 | 1.4 | 0.220 | 0.230 | 0.001 | 0.001 |
| 16.09.2013 | 1.9 | 0.230 | 0.002 | 0.001 | 0.001 |
| 14.10.2013 | 4.6 | n.a. | 0.105 | 0.002 | 0.001 |
| 18.11.2013 | 1.2 | 0.100 | 0.002 | 0.001 | 0.001 |
| 09.12.2013 | 0.7 | 0.002 | 0.001 | 0.001 | 0.001 |

(continued)

| Date | Influent [FNU] | Effluent [FNU] | | | |
|---|---|---|---|---|---|
| | | Filter 1 (64) | Filter 2 (65) | Filter 3 (66) | Filter 4 (67) |
| 03.02.2014 | 0.9 | 0.002 | 0.001 | 0.001 | 0.002 |
| 03.03.2014 | 1.5 | 0.001 | 0.001 | 0.001 | 0.001 |
| 31.03.2014 | 0.9 | 0.120 | 0.040 | 0.003 | 0.012 |

The results obtained for turbidity are shown in Table 4. Turbidity standard for drinking water in Switzerland is 0.5 FNU for filtered water. The turbidity results were similar to the results for bacteria, i.e. a generally improved performance of the natural bauxite containing filter bed 67 compared to the filter bed 64 containing standard quartz sand 60, especially during periods of higher turbidity concentrations in the filter influent.

One potential drawback of the use of natural bauxite for drinking water filtration would be the leaching of dissolved aluminium and the potential presence of unacceptably high aluminum concentrations in the filter effluent due to the high content of aluminum oxides (>50%) in the natural raw bauxite. We therefore conducted several sampling campaigns in the effluents of the filter bed containing 100% of natural bauxite 67. According to the quality standards of the WHO, the maximum allowable aluminum concentration for drinking water is 200 $\mu$g/L. Three sampling campaigns were carried out in between June 11, 2013 and December 09, 2013. All samplings showed that in the effluent of the filter containing 100 % of natural bauxite 67 were always below detection limit (< 5 $\mu$g/L) (Table 5a).

In addition, a sampling on September 03, 2014 was carried out for the measurement of several different heavy metals in the filter bed 67 of effluent 4. The results are shown in Tables 5b. Different heavy metals could not be measured (below detection limit) or only at very low concentrations (Cobalt). It is therefore concluded that the presence of dissolved aluminum in the effluent of packed bed filters containing natural bauxite does not represent an issue of concern under the tested conditions.

Table 5a: Dissolved aluminium concentrations in the effluent 4 of filter bed 67.

| Sampling Date | Dissolved Aluminium [$\mu$g/l] |
|---|---|
| | Effluent 4 |
| 11.06.2013 | <5.0 |
| 03.09.2013 | <5.0 |
| 09.12.2013 | <5.0 |

Table 5b: Concentrations of heavy metals in the effluent 4 of filter bed 67 (September 3, 2013).

| Substances (Dissolved) | Concentration [$\mu$g/L] |
|---|---|
| Aluminium | <5.0 |
| Chrome | <0.5 |
| Manganese | <1.0 |
| Cobalt | 0.7$\pm$0.07 |
| Nickel | <0.5 |
| Copper | <0.5 |
| Zinc | <5.0 |
| Arsenic | <1.0 |
| Cadmium | <0.1 |
| Lead | <0.5 |

Based on the experimental results and the theoretical considerations presented above, it is therefore apparent that the use of natural bauxite or the like with similar characteristics for example surface charge, represents a considerable improvement of the performance of slow sand filters for drinking water treatment. The use of such filtering media substantially improves the removal capacity for pathogenic microorganisms as well as other impurities. The improvement of the retention of pathogenic microorganisms in filters containing certain portions of natural bauxite (or other similar bauxite-containing filtering media or the like filtering materials with similar characteristics in terms of surface charge) is of fundamental importance with respect to the role of microbiologically safe drinking water for public health worldwide. Because MSF at large scale or at household level is a particularly adapted treatment process for remote locations and in developing countries, the use of natural bauxite as a filter media in such systems will lead to a general improvement of the sanitary conditions in such circumstances.

By "about" in relation to a given numerical value for length, pH, amount or a period of time, it is meant to include numerical values within 10% of the specified value.

By "close to zero" it is meant that the numerical value for zeta potential is in between -2 and 2.

By "slightly" as used herein it is meant to be refering to the numerical number of between 0 and 2.

By "comprising" it is meant including, but not limited to, whatever follows the word "comprising". Thus, use of the term "comprising" indicates that the listed elements are required or mandatory, but that other elements are optional and may or may not be present. The terms "comprising" and "including" as used herein are interchangeable with each other.

By "consisting of" is meant including, and limited to, whatever follows the phrase "consisting of". Thus, the phrase "consisting of" indicates that the listed elements are required or mandatory, and that no other elements may be present.

The inventions illustratively described herein may suitably be practiced in the absence of any element or elements, limitation or limitations, not specifically disclosed herein. Thus, for example, the terms "comprising", "including", "containing", etc. shall be read expansively and without limitation. Additionally, the terms and expressions employed herein have been used as terms of description and not of limitation, and there is no intention in the use of such terms and expressions of excluding any equivalents of the features shown and described or portions thereof, but it is recognized that various modifications are possible within the scope of the invention claimed. Thus, it should be understood that although the present invention has been specifically disclosed by preferred embodiments and optional features, modification and variation of the inventions embodied therein herein disclosed may be resorted to by those skilled in the art, and that such modifications and variations are considered to be within the scope of this invention.

The invention has been described broadly and generically herein. Each of the narrower species and sub-generic groupings falling within the generic disclosure also form part of the invention. This includes the generic description of the invention with a proviso or negative limitation removing any subject matter from the genus, regardless of whether or not the excised material is specifically recited herein.

Other embodiments are within the following claims and non- limiting examples. It is to be understood that these examples are for illustrative purposes only and are not to be construed to limit the scope of the present invention.

**Claims**

1. A multistage filtering system for filtering raw water and/or potable water for the removal of particles and/or microorganisms, comprising at least one compartment having filter bed including filtering media,
   **characterized in that** the filtering system is a slow sand filtering system, wherein the grain particle size of the slow sand filtering media is less than about 0.5 mm, the filtering system comprises a first roughing filter bed (61), a second roughing filter bed (62), a first slow sand filtering bed (63) and a second slow sand filtering bed (66), wherein the second slow sand filtering bed (66) has a filter bed depth of 80 cm and comprises quartz sand having a grain particle size of about 0.1 mm to 0.3 mm and further comprises 30 cm of natural bauxite (70) having a grain particle size of 0.2 mm to 0.5 mm.

2. The filtering system according to claim 1, wherein the grain particle size of the roughing filter is more than about 3 mm.

3. The filtering system according to any one of claims 1 to 2, wherein the compartment comprises at least one layer of "dirty layer" (schmutzdecke).

4. A method for filtering raw water and/or potable water for the removal of particles and/or microorganisms, said method including the steps of

   (a) providing a first (61), a second (62), a third (63) and a fourth(66) compartment, wherein the first and the second compartments (61, 62) are roughing filter beds, the third compartment is a first slow sand filter bed (63) including filtering media having a grain particle size of less than about 0.5 mm, the fourth compartment is a second slow sand filtering bed (66), wherein the second slow sand filtering bed (66) has a filter bed depth of 80 cm and comprises quartz sand having a grain particle size of about 0.1 mm to 0.3 mm and further comprises 30 cm of natural bauxite (70) having a grain particle size of 0.2 mm to 0.5 mm;
(b) connecting said first compartment to the next compartment(s) (second, third, fourth) so that liquid filtered by the first compartment is directed to the next compartment(s) (second, third, fourth, fifth...);
(c) collecting the filtered liquid from the previous steps (a) and (b) for further process.

**5.** The method according to claim 4, wherein said compartment comprises at least one "dirty layer" (schmutzdecke).

## Patentansprüche

**1.** Mehrstufiges Filtersystem zum Filtern von Rohwasser und/oder Trinkwasser zur Entfernung von Partikeln und/oder Mikroorganismen, welches mindestens einen Bereich umfasst, der ein Filterbett aufweist, das ein Filtermedium umfasst,
**dadurch gekennzeichnet, dass** das Filtersystem ein langsames Filtersystem durch Sand ist, wobei die Partikelkorngrösse des langsamen Sandfiltermediums kleiner ist als ca. 0,5 mm, wobei das Filtersystem ein erstes Grobfilterbett (61), ein zweites Grobfilterbett (62), ein erstes langsames Sandfilterbett (63) und ein zweites langsames Sandfilterbett (66) umfasst, wobei das zweite Sandfilterbett (66) eine Filterbetttiefe von 80 cm aufweist und Quarzsand umfasst, welcher eine Partikelkorngrösse von ca. 0,1 mm bis 0,3 mm aufweist und ferner umfasst 30 cm an natürlichem Bauxit (70), welches eine Partikelkorngrösse von 0,2 mm bis 0,5 mm hat.

**2.** Filtersystem gemäss Anspruch 1, wobei die Partikelkorngrösse des Grobfilters grösser ist als ca. 3 mm.

**3.** Filtersystem gemäss einem der Ansprüche 1 bis 2, wobei der Bereich mindestens eine Schicht als Schmutzdecke umfasst.

**4.** Verfahren zum Filtrieren von Rohwasser und/oder Trinkwasser zur Entfernung von Partikeln und/oder Mikroorganismen, wobei das Verfahren die Schritte umfasst

(a) Bereitstellen eines ersten (61), eines zweiten (62), eines dritten (63) und eines vierten (66) Bereichs, wobei der erste und der zweite Bereich (61, 62) Grobfilterbetten sind, der dritte Bereich ein erstes langsames Sandfilterbett (63) ist, umfassend ein Filtermedium, welches eine Partikelkorngrösse von weniger als ca. 0,5 mm aufweist, der vierte Bereich ein zweites langsames Sandfilterbett (66) ist, wobei das zweite langsame Sandfilterbett (66) eine Filterbetttiefe von 80 cm hat und Quarzsand umfasst, welcher eine Partikelkorngrösse von ca. 0,1 mm bis 0,3 mm aufweist und ferner umfasst 30 cm an natürlichem Bauxit (70), welches eine Partikelkorngrösse von 0,2 mm bis 0,5 mm hat;
(b) Verbinden des ersten Bereichs mit dem nächsten Bereich/Bereiche (zweiter, dritter, vierter), so dass von dem ersten Bereich gefilterte Flüssigkeit in den nächsten Bereich/Bereiche (zweiter, dritter, vierter, fünfter...) geleitet wird;
(c) Sammeln der gefilterten Flüssigkeit von den vorhergehenden Schritten (a) und (b) für weiteres Verfahren.

**5.** Verfahren nach Anspruch 4, wobei der Bereich mindestens eine Schmutzdecke umfasst.

## Revendications

**1.** Système de filtration multi-étagé pour filtrer de l'eau non traitée et/ou de l'eau potable en vue de supprimer des particules et/ou des microorganismes, comprenant au moins un compartiment ayant une couche de filtrage comprenant un agent filtrant,
**caractérisé en ce que** le système de filtration est un système de filtrage lent à sable, dans lequel la taille du grain de l'agent de filtrage lent constitué par le sable est inférieure à environ 0.5 mm, le système de filtration comprenant une première couche de filtrage de dégrossissage (61), une deuxième couche de filtrage de dégrossissage (62), une première couche de filtrage lent à base de sable (63) et une deuxième couche de filtrage lent à base de sable (66), la deuxième couche de filtrage lent à base de sable (66) ayant une profondeur de 80 cm et comprenant un sable de quartz ayant une taille de grain d'environ 0.1 mm à 0.3 mm, et comprenant par ailleurs 30 cm de bauxite naturel (70) ayant une taille de grain comprise entre 0.2 mm et 0.5 mm.

**2.** Système de filtration selon la revendication 1, dans lequel la taille du grain du filtre de dégrossissement est supérieure à environ 3 mm.

**3.** Système de filtration selon l'une des revendications 1 à 2, dans lequel le compartiment comprend au moins une couche dite « couche sale ».

**4.** Méthode pour filtrer l'eau non traitée et/ou l'eau potable pour en supprimer des particules et/ou des microorganismes, ladite méthode comprenant les étapes suivantes:

(a) Fournir un premier (61), d'un deuxième (62), d'un troisième (63) et d'un quatrième (66) compartiment, les premier et deuxième compartiments (61, 62) étant des couches de filtrage de dégrossissage, le troisième compartiment étant une première couche de filtrage lent à base de sable (63) comprenant un agent filtrant dont la taille de grain est inférieure à environ 0.5 mm, le quatrième compartiment étant une deuxième couche de filtrage lent à base de sable (66), la deuxième couche de filtrage lent à base de sable (66) ayant une profondeur de 80 cm et comprenant du sable de quartz dont la taille de grain est d'environ 0.1 mm à 0.3 mm, et comprenant en outre 30 cm de bauxite naturel (70) ayant une taille de grain de 0.2 mm à 0.5 mm;
(b) Relier ledit premier compartiment au(x) compartiment(s) suivant(s) (deuxième, troisième, quatrième) de manière à ce que le liquide filtré par le premier compartiment soit dirigé vers le(s) compartiment(s) suivant(s) (deuxième, troisième, quatrième, cinquième, ...) ;
(c) Collecter le liquide filtré lors des étapes précédentes (a) et (b) pour traitement ultérieur.

**5.** Méthode selon la revendication 4, dans laquelle ledit compartiment comprend au moins couche dit « couche sale ».

FIG. 1

FIG. 2

## Down Flow Filtering System

**FIG. 3a**

20
11
21

## Up Flow Filtering System

**FIG. 3b**

21
20
11

## Horizontal Filtering System

**FIG. 3c**

20
11
21

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03078030 A
- US 2007181511 A

- GB 490972 A